(19) Europäisches Patentamt
European Patent Office
Office européen des brevets

(11) **EP 3 089 320 A1**

(12) **EUROPEAN PATENT APPLICATION**
published in accordance with Art. 153(4) EPC

(43) Date of publication:
**02.11.2016 Bulletin 2016/44**

(51) Int Cl.:
***H02J 50/00*** *(2016.01)*

(21) Application number: **13899032.0**

(86) International application number:
**PCT/JP2013/083133**

(22) Date of filing: **10.12.2013**

(87) International publication number:
**WO 2015/087399 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The Chugoku Electric Power Co., Inc. Hiroshima-shi, Hiroshima 730-8701 (JP)**

(72) Inventor: **OKIDAN, Kazuma Hiroshima-shi Hiroshima 730-8701 (JP)**

(74) Representative: **Osha Liang 2, rue de la Paix 75002 Paris (FR)**

(54) **POWER-TRANSMITTING DEVICE AND POWER-FEEDING SYSTEM**

(57) The present invention is to solve a problem of damage to a power transmission circuit due to an increase in a supplied current by appropriately controlling transmission or cutoff of electric power from a power transmission device to a power receiving device. The power transmission device includes a power transmission circuit, a magnetic body 26 and a moving device. The power transmission circuit includes a power transmission coil 24 being configured to supply a power receiving coil 34 of a power receiving device with electric power. The magnetic body 26 is magnetically coupled with the power transmission coil 24. The moving device changes the relative positional relationship between the magnetic body 26 and the power transmission coil 24, to change an impedance of the power transmission circuit such that the electric power is cut off or supplied.

FIG. 5

**Description**

[Technical Field]

The present invention relates to a power transmission device and a power feeding system.

[Background Art]

There is known a power feeding system that includes, for example, a power transmission device and a power receiving device (for example, PTL 1).

[Citation List]

[Patent Literature]

[PTL 1] Japanese Patent Application Laid-open Publication No. 2013-70590

[Summary of Invention]

[Technical Problem]

For example, the power feeding system in PTL 1 does not have controlled the transmission or the cut off of the electric power from the power transmission device to the power receiving device. Accordingly, an increase in transmitted electric energy results in an increase in a current that is to be supplied to a power transmission circuit in the power transmission device, possibly causing damage to the power transmission circuit.

[Solution to Problem]

The present invention to solve the above-described problems is a power transmission device including a power transmission circuit that includes a power transmission coil to transmit electric power to a power receiving coil of a power receiving device, a magnetic body that is magnetically coupled with the power transmission coil, and a moving device that changes a relative positional relationship between the magnetic body and the power transmission coil to change an impedance of the power transmission circuit such that the electric power is cut off or transmitted.

Other features of the present invention will become apparent from the descriptions of the accompanying drawings and of the present specification.

[Advantageous Effects of Invention]

According to the present invention, electric power supplied from a power transmission device to a power receiving device can be cut off or transmitted.

[Brief Description of Drawings]

[Fig. 1]

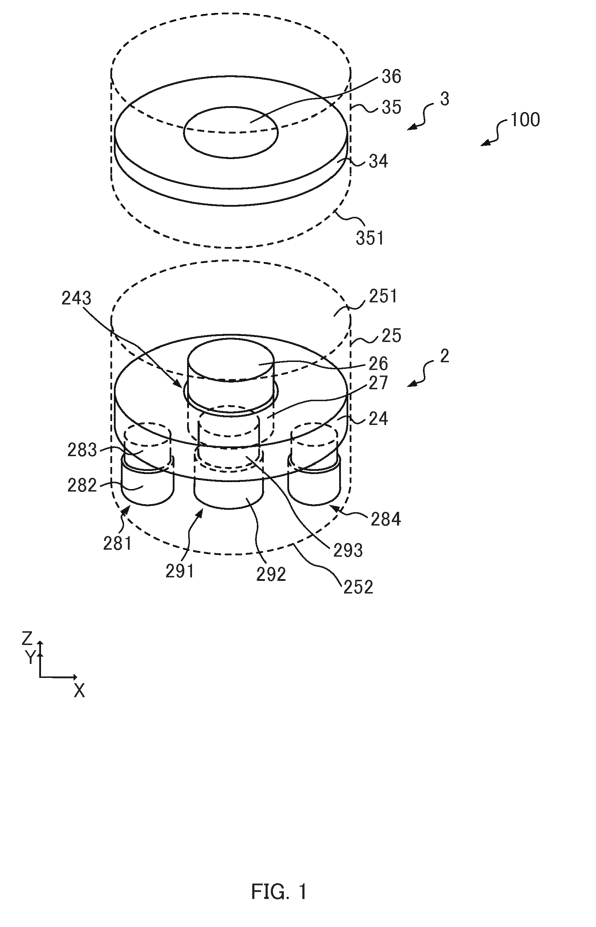

Fig. 1 is a transparent view illustrating a power feeding system of a first embodiment of the present invention.
[Fig. 2]

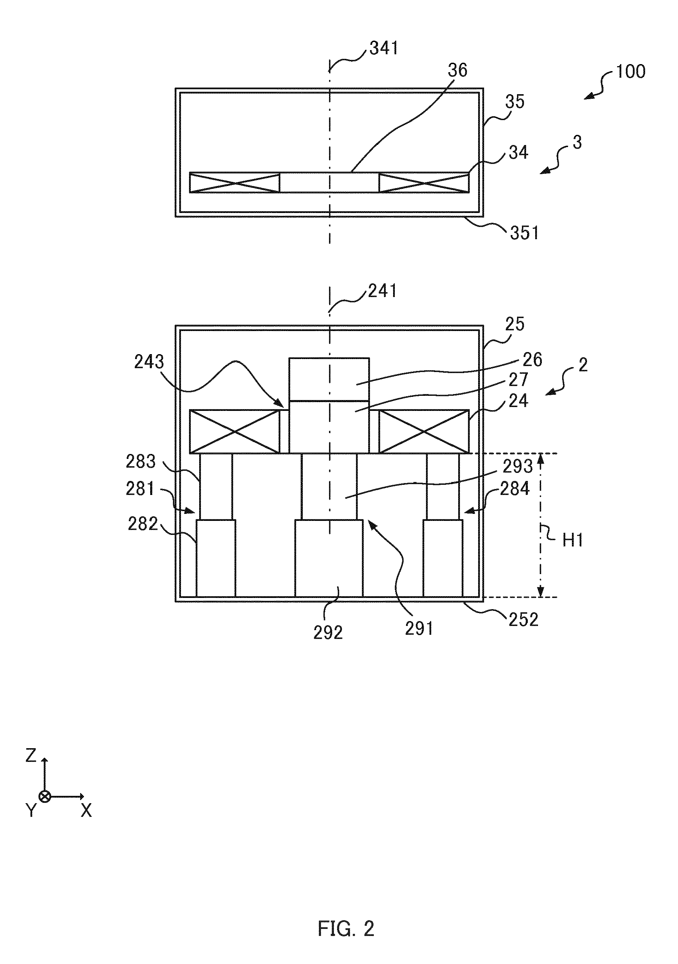

Fig. 2 is a cross-sectional view illustrating the power feeding system of the first embodiment of the present invention.
[Fig. 3]

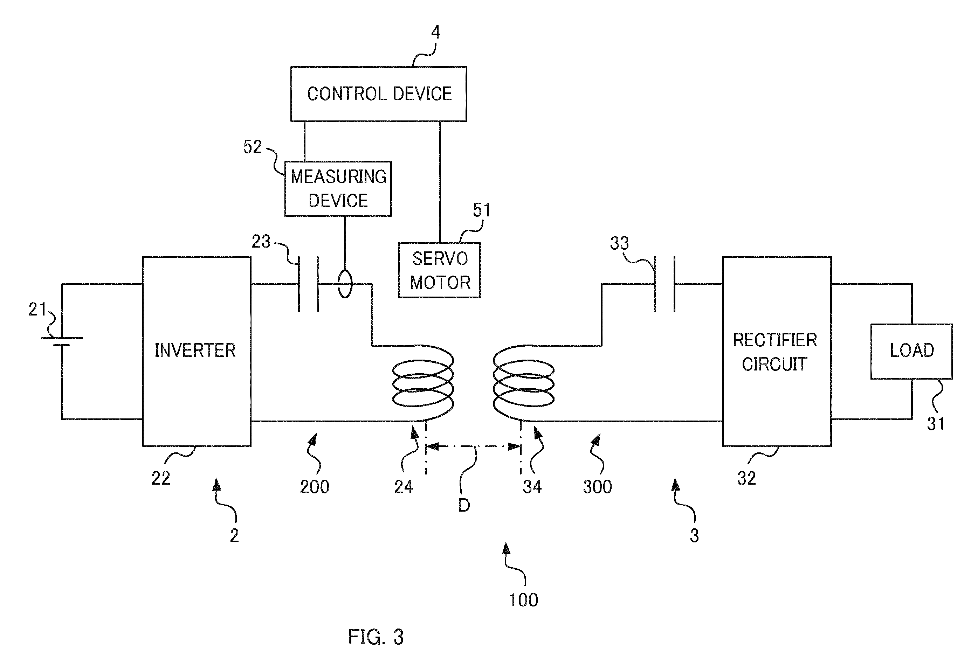

Fig. 3 is a drawing illustrating the power feeding system of the first embodiment of the present invention.
[Fig. 4]

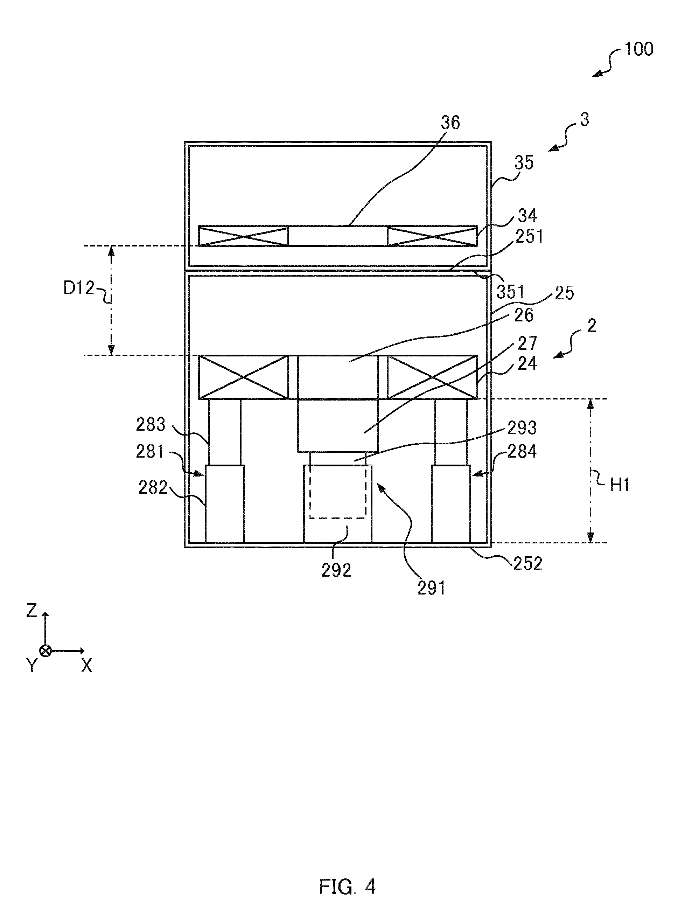

Fig. 4 is a cross-sectional view illustrating the power feeding system of the first embodiment of the present invention having a power receiving device disposed at a first position.
[Fig. 5]

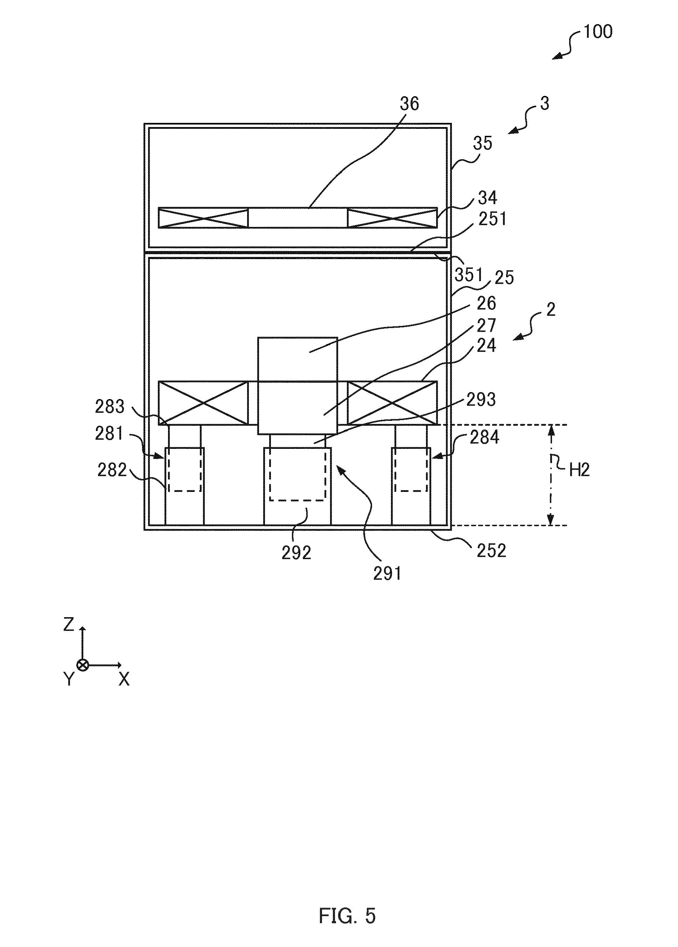

Fig. 5 is a cross-sectional view illustrating the power feeding system of the first embodiment of the present invention having a power transmission coil moved to a second height.
[Fig. 6]

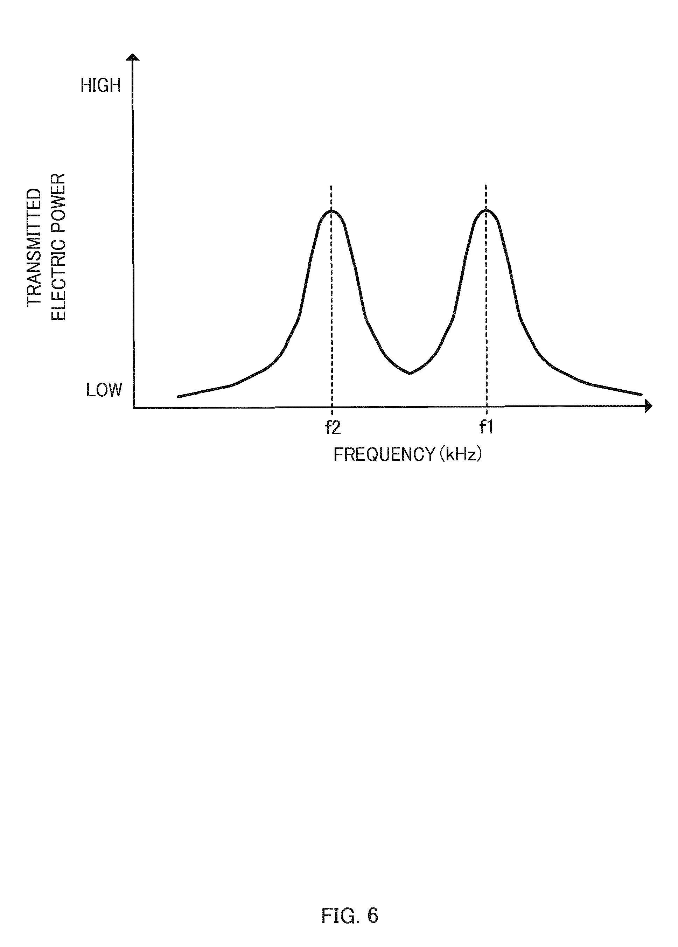

Fig. 6 is a drawing illustrating a relationship between a frequency and transmitted electric power of the first embodiment of the present invention.

[Fig. 7]

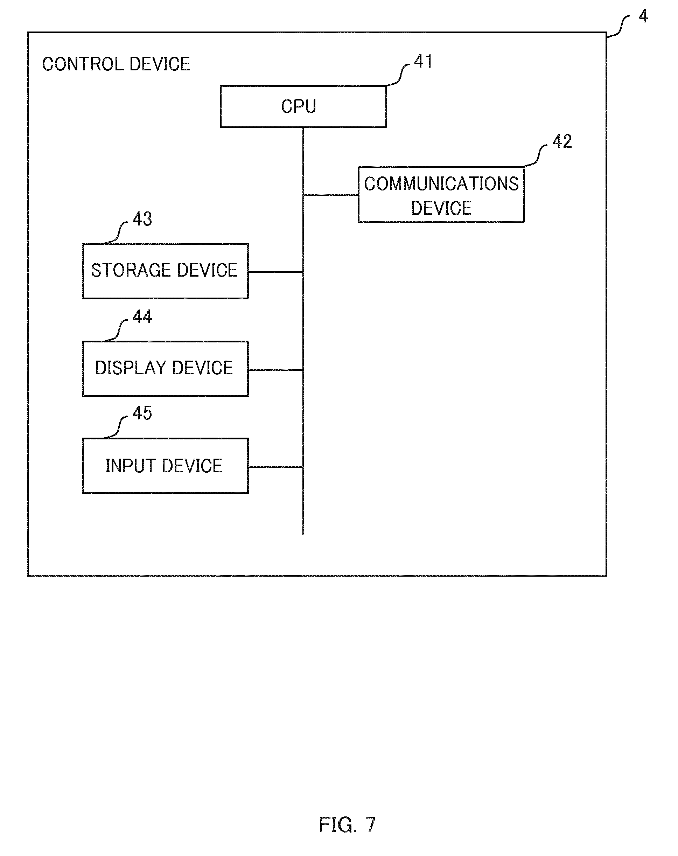

Fig. 7 is a drawing illustrating hardware of a control device of the first embodiment of the present invention.

[Fig. 8]

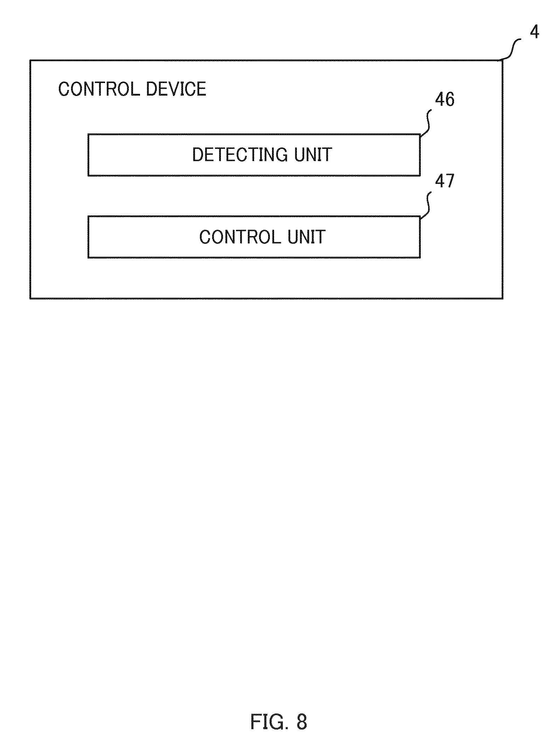

Fig. 8 is a drawing illustrating functions of the control device of the first embodiment of the present invention.

[Fig. 9]

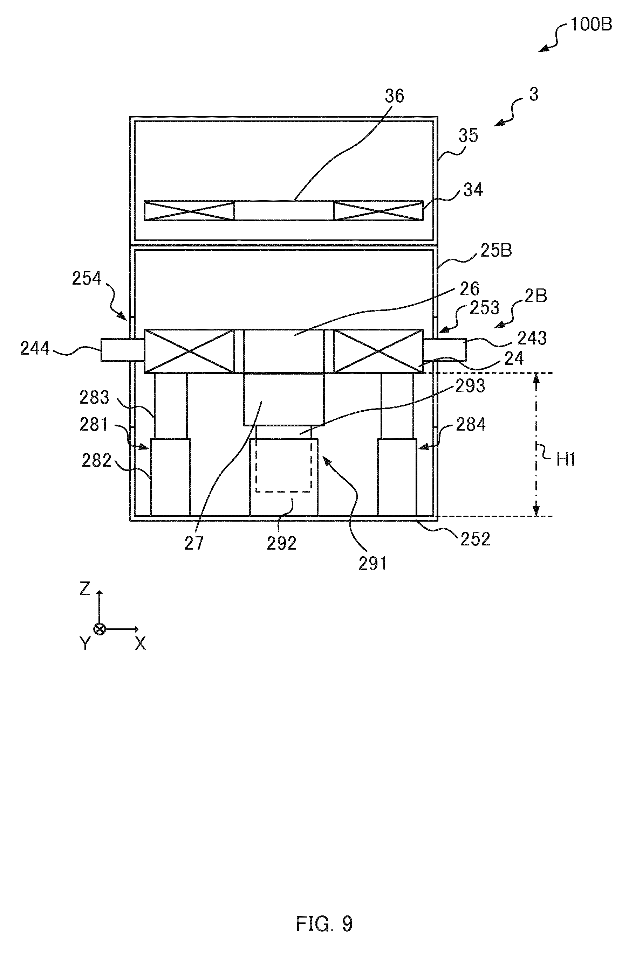

Fig. 9 is a cross-sectional view illustrating the power feeding system of the second embodiment of the present invention having the power receiving device disposed at the first position.

[Fig. 10]

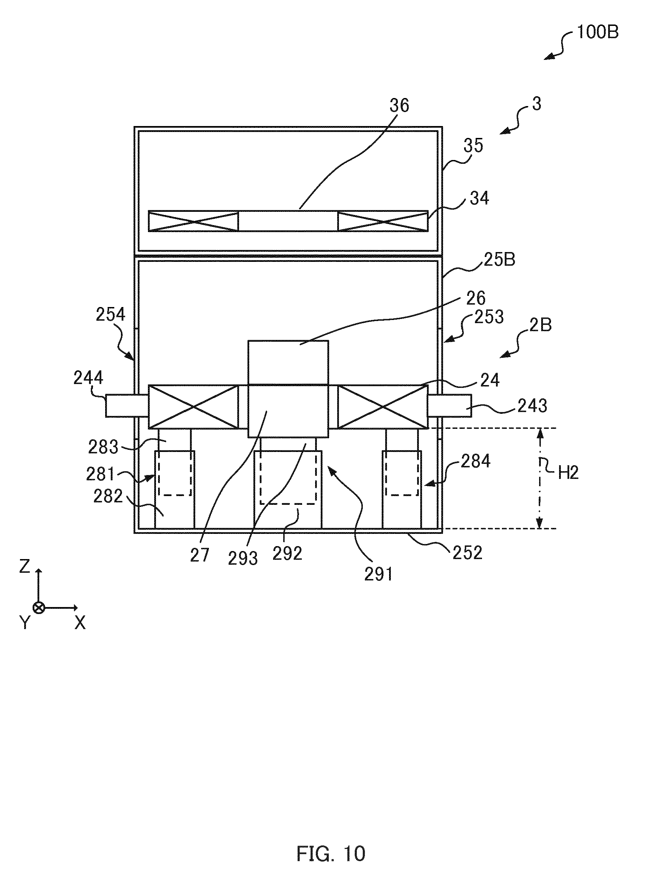

Fig. 10 is a cross-sectional view illustrating the power feeding system of the second embodiment of the present invention having the power transmission coil moved to the second height.

[Description of Embodiments]

At least the following matters will become apparent from descriptions of the present specification and of the accompanying drawings.

[First Embodiment]

===Power Feeding System===

The following describes the power feeding system of the present embodiment with reference to Fig. 1 to Fig. 3. Fig. 1 is a transparent view illustrating the power feeding system of the present embodiment. The casings 25 and 35 are indicated by dashed lines for the convenience of explanation. Fig. 2 is a cross-sectional view illustrating the power feeding system of the present embodiment. Fig. 2 illustrates a cross section of a power feeding system 100 cut parallel to an X-Z plane along an approximate center of the power feeding system 100 in Fig. 1 and viewed toward +Y (from the front to the back plane of the paper.) Fig. 3 is a drawing illustrating the power feeding system of the present embodiment.

The power feeding system 100 is a system that performs wireless power transmission using, for example, a resonance phenomenon in an electromagnetic field. A Z-axis is an axis along a vertical direction which is adjacent to the power transmission device 2 and the power receiving device 3. A direction from the power transmission device 2 to the power receiving device 3 is defined as +Z while a direction from the power receiving device 3 to the power transmission device 2 is defined as -Z. An X-axis is an axis along a direction in which the moving devices 281, 284 are arranged. A direction from the moving device 281 toward the moving device 284 is defined as +X while a direction from the moving device 284 toward the moving device 281 is defined as -X. A Y-axis is an axis orthogonal to the X-axis and the Z-axis. A direction from the front surface of the paper to the back surface of the paper is defined as +Y while a direction from the back plane of the paper to the front plane of the paper is defined as -Y.

The power feeding system 100 includes a power transmission device 2 and a power receiving device 3.

The power transmission device 2 is a device that wirelessly transmits electric power to the power receiving device 3.

The power receiving device 3 is a device that receives electric power output from the power transmission device 2 and supplies electric power according to the received electric power to a load 31.

The load 31 is an electric power load such as an electrical device that operates based on the electric power supplied from the power receiving device 3.

=Power Transmission Device=

<Shape and Similar Specifications>

The power transmission device 2 includes a power transmission coil 24, a casing 25, a magnet 26 (second magnet), a magnetic body 27, moving devices 281, 284, and a elastic device 291 (also called "electric power control mechanism".) Here, the magnet 26 and the elastic device 291 correspond to the moving device. And the elastic device 291 corresponds to the elastic body.

The casing 25 houses a power transmission circuit 200 and the electric power control mechanism. The outer shape of the casing 25 has, for example, a columnar shape and is formed with, for example, an insulated material such as resin.

The power transmission coil 24 is tubularly wound around the winding shaft 241, which is along the vertical direction (the Z-axis). The power transmission coil 24 has an opening 243 formed at substantially the center thereof through which the magnet 26 and the magnetic body 27 are inserted and taken out. For example, the power transmission coil 24 may have an opening similar to that of the opening 243 and may be housed in an insulated case that is along the outer shape of the power transmission coil 24.

The moving devices 281, 284 are secured to the bottom plate 252 of the casing 25 and support the power transmission coil 24 in a manner movable in the vertical direction. The moving device 281 includes a first member 282 and a second member 283.

The first member 282 is in a cylindrical form and is formed with, for example, an insulated material such as resin. The lower end (-Z) of the first member 282 is secured to the bottom plate 252.

The second member 283 is in a columnar shape and is formed with, for example, an insulated material such as resin. The upper end (+Z) of the second member 283 is secured to the lower portion (-Z) of the power transmission coil 24. The outer diameter of the second member 283 is set to be smaller than the inner diameter of the first member 282 such that the second member 283 can be inserted inside the first member 282. The second member 283 is moved upward (+Z) or downward (-Z) by using, for example, an actuator (not shown) disposed inside the first member 282. This actuator is operated based on the driving force imparted by the servo motor 51 which is controlled by the control device 4. In other words, the moving device 281 moves the power transmission coil 24 upward or downward by controlling the control device 4. Description of the moving device 284 is omitted since the moving device 284 is similar to the moving device 281.

The moving device 281 moves the power transmission coil 24 to a position at either the first height where the power transmission coil 24 reaches a vertical height of H1 (Fig. 2) from the bottom plate 252 or the second height where the power transmission coil 24 reaches a vertical height of H2 (Fig. 5) from the bottom plate 252.

The magnetic body 27 is, for example, a cobalt or a ferrite for changing the impedance of the power transmission circuit 200 which includes the power transmission coil 24. For example, the magnetic body 27 may be a coil being wound around a winding shaft which is along the Z axis. The magnetic body 27 is magnetically coupled with the power transmission coil 24. The magnetic body 27 may be, for example, a ferromagnet. The magnetic body 27 is in a substantially columnar shape. The outer diameter of the magnetic body 27 is set to be smaller than the diameter of the opening 243 such that the magnetic body 27 can be moved into and out from the opening 243 of the power transmission coil 24.

The magnet 26 is secured to the upper face (+Z) of the magnetic body 27 using, for example, adhesives such that the magnet 26 moves in the vertical direction together with the magnetic body 27 based on the magnetic force imparted by the magnet 36 (first magnet) of the power receiving device 3. The outer diameter of the magnet 26 is set to be smaller than the diameter of the opening 243 such that the magnet 26 can be moved into and out from the opening 243 of the power transmission coil 24. The magnet 26 is assumed to be magnetically placed such that the upper portion of the magnet 26 and the lower portion of the magnet 36 are homopolar so that the magnet 26 and the magnet 36 turn each other away. The magnet 26 may be formed with, for example, a material with a relative magnetic permeability lower than that of the magnetic body 27 such that, for example, effects on the changes in the impedance of the power transmission circuit 200 by the movement of the magnet 26 is kept relatively small.

The elastic device 291 elastically supports the magnetic body 27 and the magnet 26 in a vertically movable manner. The elastic device 291 is secured at the substantial center of the bottom plate 252. Therefore, the magnetic body 27 would be disposed to include the winding shaft 241 of the power transmission coil 24. The elastic device 291 includes a first member 292 and a second member 293.

The first member 292 is in a cylindrical form and is formed with, for example, an insulated material such as resin. The lower end of the first member 292 is secured to the bottom plate 252.

The second member 293 is in a columnar shape and is formed with, for example, an insulated material such as resin. The upper end of the second member 293 is secured to the lower face (-Z) of the magnetic body 27. The outer diameter of the second member 293 is set to be smaller than the inner diameter of the first member 292 such that the second member 293 can be inserted inside the first member 292. The second member 293 is biased from the lower side to the upper side by, for example, an elastic force of an elastic body such as a spring which is disposed inside the first member 292.

<Circuit>

The power transmission device 2 further includes a power supply 21, an inverter 22, a capacitor 23, the control device 4, the servo motor 51, and a measuring device 52.

The power supply 21 generates a DC power. The inverter 22 converts a DC power supplied from the power supply 21 into an AC power. The power transmission coil 24 is a primary side coil of the power feeding system 100 to wirelessly supply a power receiving coil 34 with electric power. The capacitor 23 is used to set the impedance of the power transmission circuit 200.

One end of the power supply 21 is coupled to one end of the capacitor 23 via the inverter 22. The other end of the power supply 21 is coupled to one end of the power transmission coil 24 via the inverter 22. The other end of the power transmission coil 24 is coupled to the other end of the capacitor 23. These couplings form the power transmission circuit 200 including the power supply 21, the inverter 22, the capacitor 23, and the power transmission coil 24.

The DC power output from the power supply 21 is converted from DC into AC by the inverter 22 and is supplied to the power transmission coil 24. The AC power supplied to the power transmission coil 24 is supplied from the power transmission coil 24 to the power receiving coil 34.

The measuring device 52 measures the current supplied to the power transmission coil 24 and transmits a cutoff signal to the control device 4. For example, when a current with a value larger than a predetermined value is measured, the measuring device 52 transmits the cutoff signal. The predetermined value is, for example, a value to the extent of not damaging the power transmission device 2. The predetermined value may be determined based on a specification or a similar condition of the power transmission device 2.

The servo motor 51 imparts a driving power to the moving devices 281, 284 for driving the moving devices 281, 284. The control device 4 controls the servo motor 51.

When the control device 4 receives a cutoff signal, the control device 4 moves the power transmission coil 24 such that the electric power supplied from the power transmission coil 24 to the power receiving coil 34 is cut off in turn changing the impedance of the power transmission circuit 200. Description of the control device 4 will be given later.

=Power Receiving Device=

<Shape and Similar Specifications>

The power receiving device 3 includes the power receiving coil 34, a casing 35 and the magnet 36.

The casing 35 houses the magnet 36 and a power receiving circuit 300 which includes the power receiving coil 34. The outer shape of the casing 35 has, for example, a columnar shape and is formed with, for example, an insulated material such as resin.

The power receiving coil 34 is wound around the winding shaft 341, which is along the vertical direction (the Z-axis.) The power receiving coil 34 is secured to a predetermined position close to the lower side (-Z) inside the casing 35.

The magnet 36 is in, for example, a substantially columnar shape. The outer diameter of the magnet 36 is set to be smaller than the inner diameter of the power receiving coil 34 such that the magnet 36 is secured inside the power receiving coil 34. The magnet 36 is secured to the power receiving coil 34 using, for example, adhesives while in a state disposed inside the power receiving coil 34.

<Circuit and Similar Components>

The power receiving device 3 further includes a rectifier circuit 32 and a capacitor 33.

The power receiving coil 34 is a secondary side coil of the power feeding system 100 to which electric power is wirelessly supplied from the power transmission coil 24. The rectifier circuit 32 converts an AC power supplied from the power receiving coil 34 into a DC power and supplies this converted DC power to the load 31. The capacitor 33 is used to set a value of an impedance of the power receiving circuit 300.

One end of the power receiving coil 34 is coupled to the load 31 via the capacitor 33 and the rectifier circuit 32. The other end of the power receiving coil 34 is coupled to the load 31 via the rectifier circuit 32. These couplings form the power receiving circuit 300 including the power receiving coil 34, the capacitor 33, the rectifier circuit 32, and the load 31.

===Electric Power Transmission and the like===

The following describes the electric power transmission and the like according to the present embodiment with reference to Fig. 2 to Fig. 5. Fig. 4 is a cross-sectional view illustrating the power feeding system of the present embodiment having a power receiving device disposed at a first position. Fig. 5 is a cross-sectional view illustrating the power feeding system of the present embodiment having a power transmission coil moved to a second height. Fig. 4 and Fig. 5 illustrate cross-sectional views similar to that of Fig. 2.

<Case When Transmitting Electric Power>

When the power transmission device 2 transmits electric power to the power receiving device 3, the power receiving device 3 is disposed at the first position. As illustrated in Fig. 4, the first position is a position where an opposed surface 351 of the power receiving device 3 and an opposed surface 251 of the power transmission device 2 are in contact.

When the power receiving device 3 is moved from the second position to the first position, which is to be described later, a magnetic force is imparted from the magnet 36 to the magnet 26 in the downward direction (-Z) which is in a direction opposite the upwardly directed (+Z) elastic force which is imparted from the elastic device 291 to the magnetic body 27. The magnet 26 and the magnetic body 27 are moved to the lower side (-Z) based on the magnetic force which works against the elastic force. The elastic force here is set such that the magnet 26 and the magnetic body 27 are disposed at a position where the magnet 26 is encircled by the power transmission coil 24 while the magnetic body 27 is not encircled by the power transmission coil 24, when the power transmission coil 24 is disposed at the first height and the power receiving device 3 is disposed at the first position as well. The relative positional relationship among the power receiving coil 34, the power transmission coil 24 and the magnetic body 27 illustrated in Fig. 4 is also called the first positional relationship.

<Case When Electric Power is not Transmitted>

When the power transmission device 2 does not transmit electric power to the power receiving device 3, the power receiving device 3 is disposed at a second position. As illustrated in Fig. 2, the second position is a position where the power receiving device 3 is apart from the power transmission device 2. In other words the second position is a position where the power receiving device 3 is farther distant from the power transmission coil 24 than when at the first position. And the second position is a position where the magnetic force of the magnet 36 is not imparted to the magnet 26.
A magnetic force would not be imparted from the magnet 36 to the magnet 26 when the power receiving device 3 is moved from the first position to the second position. The magnet 26 and the magnetic body 27 are moved upward (+Z) by the elastic force. The elastic force here is set such that the magnet 26 and the magnetic body 27 are disposed so that the magnet 26 is not encircled by the power transmission coil 24 and the magnetic body 27 is encircled by the power transmission coil 24, when the power transmission coil 24 is disposed at the first height and the power receiving device 3 is disposed at the second position. The relative positional relationship among the power receiving coil 34, the power transmission coil 24 and the magnetic body 27 illustrated in Fig. 2 is also called the second positional relationship.

<Case When Cutting Off Transmitted Electric Power>

The power transmission coil 24 is moved from the first height to the second height when cutting off the electric power transmitted from the power transmission device 2 to the power receiving device 3. In this case, the relative positional relationship among the power receiving coil 34, the power transmission coil 24 and the magnetic body 27 is the positional relationship illustrated in Fig. 5. This positional relationship is also called the third positional relationship.

===Settings of Power Transmission Device and Power Receiving Device===

The following describes the settings of the power transmission device and the power receiving device according to the present embodiment with reference to Fig. 2 and Fig. 4 to Fig. 6. Fig. 6 is a drawing illustrating a relationship between a frequency and transmitted electric power of the present embodiment. The frequency in Fig. 6 indicates the frequency of the electric power output from the power transmission coil 24. And the transmitted electric power indicates the electric power transmitted from the power transmission coil 24 to the power receiving coil 34. The transmitted electric power here is determined based on, for example, the transmission efficiency and the like of the electric power transmitted from the power transmission coil 24 to the power receiving coil 34.
The power transmission device 2 and the power receiving device 3 are set based on the transmission efficiency. Settings of the power transmission device 2 and the power receiving device 3 include, for example, setting the frequency of the electric power transmitted from the power transmission device 2 and impedances of the power transmission circuit 200 and the power receiving circuit 300.

<Transmission Efficiency>

As described above, the transmission efficiency is determined based on a resonant frequency or a similar condition. These resonant frequencies f1 and f2 are, for example, determined based on Expression (1) to Expression (3).
[Math 1]

$$f_0 = \frac{1}{2\pi\sqrt{LC}} \quad \cdot \cdot \cdot \quad (1)$$

$$f_1 = \frac{f_0}{\sqrt{1-k}} \quad \cdot \cdot \cdot \quad (2)$$

$$f_2 = \frac{f_0}{\sqrt{1+k}} \quad \cdot \cdot \cdot \quad (3)$$

L indicates the value of the inductance of the power transmission circuit 200 and C indicates the capacitance value of the power transmission circuit 200. k indicates a coupling coefficient between the power transmission coil 24 and the power receiving coil 34.

The value of the coupling coefficient k changes according to a transmission distance D, which indicates a distance between the power transmission coil 24 and the power receiving coil 34. Alternatively, a unique resonant frequency $f_0$ varies according to the value of the inductance of the power transmission circuit 200. That is, the resonant frequencies $f_1$ and $f_2$, namely, the transmission efficiency varies according to the transmission distance D and the value of the inductance of the power transmission circuit 200. Accordingly, varying the transmission distance D and the inductance of the power transmission circuit 200 ensures transmitting or cutting off electric power from the power transmission device 2 to the power receiving device 3.

<Settings of Power Transmission Device and Power Receiving Device>

The power transmission device 2 and the power receiving device 3 are configured such that electric power is transmitted when the relative positional relationship among the power receiving coil 34, the power transmission coil 24 and the magnetic body 27 is in a first positional relationship and electric power is not transmitted when the relative positional relationship among the power receiving coil 34, the power transmission coil 24 and the magnetic body 27 is in the second and third positional relationships.

===Control Device===

The following describes the control device according to the present embodiment with reference to Fig. 7 and Fig. 8. Fig. 7 is a drawing illustrating hardware of the control device of the present embodiment. Fig. 8 is a drawing illustrating functions of the control device of the present embodiment.

The control device 4 includes a Central Processing Unit (CPU) 41, a communications device 42, a storage device 43, a display device 44, and an input device 45. The CPU 41 executes a program stored in the storage device 43 to achieve various functions of the control device 4 and to integrally control the control device 4. The storage device 43 stores the above-described programs and various pieces of information. The display device 44 is a display to display information on the control device 4. The input device 45 is, for example, a keyboard and a computer mouse to input information to the control device 4. The communications device 42 performs communications between the servo motor 51 and the measuring device 52.

The control device 4 further includes a detecting unit 46 and a control unit 47 (also referred to as "various functions of the control device 4"). The execution of the program stored in the storage device 43 by the CPU 41 achieves the various functions of the control device 4.

When the detecting unit 46 receives the cutoff signal, the detecting unit 46 detects an abnormality in the power transmission device 2. The measuring device 52 may transmit the cutoff signal to the control device 4. Alternatively, a user of the power feeding system 100 may transmit the cutoff signal to the control device 4 via the input device 45.

The control unit 47 moves the power transmission coil 24 to the first height or the second height based on the results detected by the detecting unit 46.

===Operations of Power Feeding System===

The following describes the operations of the power feeding system of the present embodiment with reference to Fig. 2, Fig. 4, and Fig. 5.

<When Electric Power is not Transmitted (Fig. 2)>

When the power transmission device 2 does not transmit electric power to the power receiving device 3, the power receiving device 3 is disposed at the second position. The relative positional relationship among the power receiving coil 34, the power transmission coil 24 and the magnetic body 27 becomes the second positional relationship, and deteriorates the transmission efficiency and enters the power receiving device 3 in a state where the electric power is not transmitted.

<When Electric Power is Transmitted (Fig. 4)>

When the power transmission device 2 transmits electric power to the power receiving device 3, the power receiving device 3 is disposed at the first position. Further, in this case, the power transmission coil 24 is moved to the first height. The relative positional relationship between the power receiving coil 34, the power transmission coil 24 and the magnetic body 27 becomes the first positional relationship, and the electric power is transmitted with improved transmission efficiency.

<When Transmitted Electric Power is Cut off (Fig. 5)>

When electric power is cut off while the power transmission device 2 transmits this electric power to the power receiving device 3, the power transmission coil 24 is moved from the first height to the second height. The relative positional relationship among the power receiving coil 34, the power transmission coil 24 and the magnetic body 27 becomes the third positional relationship, and the transmission efficiency deteriorates and the electric power is cut off.

[Second Embodiment]

The power feeding system 100B of the second embodiment has the power transmission device 2 in the power feeding system 100 of the first embodiment changed to a power transmission device 2B.

===Power Feeding System===

The following describes the power feeding system of the present embodiment with reference to Fig. 9 and Fig. 10. Fig. 9 is a cross-sectional view illustrating the power feeding system of the present embodiment having a power receiving device provided at the first position. Fig. 10 is a cross-sectional view illustrating the power feeding system of the present embodiment having the power transmission coil moved to the second height. Parts in Figs. 9 and 10 same as those in Figs. 4 and 5 are designated like reference characters used in Figs. 4 and 5.

=Configuration=

The power feeding system 100B includes the power transmission device 2B. The casing 25B of the power transmission device 2B includes oblong holes 253, 254 which communicate from the inside of the casing 25B to the outside thereof. The oblong holes 253, 254 are provided vertically to the side face of the casing 25B such that the projections 243, 244 can be moved in the vertical direction (Z axis.)
The projections 243, 244 are used to cut off the electric power transmitted from the power transmission device 2B to the power receiving device 3 by, for example, the user manually moving the power feeding system 100B. The projections 243, 244 are secured to the outer side face of the power transmission coil 24.

=Operation=

Electric power is transmitted when the relative positional relationship among the power receiving coil 34, the power transmission coil 24 and the magnetic body 27 becomes the first positional relationship (Fig. 9) by the user manually moving the power feeding system 100B. When the relative positional relationship among the power receiving coil 34, the power transmission coil 24 and the magnetic body 27 becomes the third positional relationship (Fig. 10) by the user manually moving the power feeding system 100B, while electric power is being transmitted, the electric power would be cut off. In other words, the electric power can be transmitted or cut off by a manual operation.

<When Transmitting Electric Power (Fig. 9)>

The power receiving device 3B is disposed at the first position when electric power is transmitted from the power transmission device 2 to the power receiving device 3B. Further in this case, the power transmission coil 24 is moved to the first height. The relative positional relationship among the power receiving coil 34, the power transmission coil 24 and the magnetic body 27 becomes the first positional relationship, and the electric power is transmitted with improved transmission efficiency.

<When Transmitted Electric Power is Cut off (Fig. 10)>

When electric power is cut off during the power transmission device 2 transmitting this electric power to the power receiving device 3, the power transmission coil 24 is moved from the first height to the second height based on the moving force imparted to the projections 243, 244. The relative positional relationship between the power receiving coil 34, the power transmission coil 24 and the magnetic body 27 becomes the third positional relationship, and the transmission efficiency deteriorates and the electric power is cut off.

As described above, the power transmission device 2 (first embodiment) includes the power transmission circuit 200, the magnetic body 27, and the moving devices 281, 284. The power transmission circuit 200 includes the power transmission coil 24 to transmit electric power to the power receiving coil 34 of the power receiving device 3. The magnetic body 27 is magnetically coupled with the power transmission coil 24. The moving devices 281, 284 change the relative positional relationship between the magnetic body 27 and the power transmission coil 24 to change the impedance of the power transmission circuit 200 such that the electric power is cut off or supplied. Accordingly, the electric power supplied from the power transmission device 2 to the power receiving device 3 can be cut off or transmitted. This ensures preventing the power transmission device 2 from being damaged by supplying a current exceeding a rated current to the power transmission circuit 200. This ensures improving safety of the power feeding system 100.

The moving devices 281, 284 move the power transmission coil 24 to cut off the electric power upon reception of the cutoff signal for cutting off the electric power. Hereby the electric power is automatically cut off based on the cutoff signal. Thus the safety of the power feeding system 100 can be improved.

The magnetic body 27 is disposed to include the winding shaft 241 of the power transmission coil 24. The moving devices 281, 284 move the power transmission coil 24 along the winding shaft 241. Thus the amount of impedance of the power transmission circuit 200 changed by the moving of the power transmission coil 24 can be increased to certainly cut off the electric power.

Further, the magnetic body 27 is formed such that the outer diameter of the magnetic body 27 is smaller than the inner diameter of the power transmission coil 24. The moving devices 281, 284 move the power transmission coil 24 such that the state of the magnetic body 27 being encircled by the power transmission coil 24 is shifted to the state of the magnetic body 27 not being encircled by the power transmission coil 24, or vice versa. Thus the amount of impedance of the power transmission circuit 200 changed by the moving of the power transmission coil 24 can be further increased to further certainly cut off the electric power.

The magnet 26 and the elastic device 291 as the moving device move the magnetic body 27 to transmit or cut off the electric power according to the position of the power receiving device 3. Hereby, the electric power can be transmitted or cut off without performing, for example, on-off switching to control the transmission or cut off of the electric power. Thus a power transmission device 2 which is easy to use can be provided.

The power receiving device 3 includes the magnet 36. The magnet 26 of the power transmission device 2 is secured to the magnetic body 27 such that the magnet 26 moves together with the magnetic body 27 based on the magnetic force imparted by the magnet 36. The elastic device 291 imparts to the magnetic body 27 an elastic force which is in a direction opposite the direction of the aforementioned magnetic force. The elastic force of the elastic device 291 is set such that the magnetic body 27 moves in the downward direction (-Z) based on the magnetic force which works against the elastic force in order to transmit the electric power when the power receiving device 3 is disposed at the first position, and the magnetic body 27 moves upward (+Z) based on the elastic force in order to cut off the electric power when the power receiving device 3 is disposed at the second position that does not allow transmission of the electric power and that is apart from the power transmission coil 24 compared to the first position. Thus the magnetic body 27 can be moved using a relatively simple mechanism including the magnet 26 and the elastic device 291. Hereby, for example, this eliminates the need for disposing a distance sensor and the like which detects the distance between the power transmission device 2 and the power receiving device 3 in turn reducing the manufacturing cost of the power transmission device 2. Additionally, a power source for moving the magnetic body 27 is needless so that a power transmission device 2 which is easy to use can be provided.

The magnet 26 is secured to the magnetic body 27 such that the magnet 26 is arranged side by side with the magnetic body 27 along the moving direction (Z axis) of the magnetic body 27. Thus the electric power can be certainly transmitted or cut off by certainly moving the magnetic body 27 along the moving direction.

The magnetic body 27 is, for example, a ferrite. Thus, the relative magnetic permeability of the magnetic body 27 can be improved to increase the amount of changes in the impedance of the power transmission circuit 200.

The magnetic body 27 is, for example, a coil. Thus, the weight of the magnetic body 27 can be reduced. And

**EP 3 089 320 A1**

the relative magnetic permeability of the magnetic body 27 can be relatively easily adjusted by changing the number of turns in the coil.

The first and second embodiments are intended for easy understanding of the present invention and are not in any way to be construed as limiting the present invention. The present invention may be modified and improved without departing from the scope of the invention, and equivalents thereof are also encompassed by the invention.

The first embodiment describes that the elastic device 291 imparts an elastic force to the magnetic body 27. However, this should not be construed in a limiting sense. For example, the elastic force may be directly imparted to the magnetic body 27 with a spring and the like.

The first embodiment also describes that the power transmission device 2 and the power receiving device 3 are configured such that electric power is transmitted when in the first positional relationship and electric power is not transmitted when in the second and the third positional relationships. However, this should not be construed in a limiting sense. For example, the power transmission device 2 and the power receiving device 3 may be configured such that electric power is transmitted when in the third positional relationship and electric power is not transmitted when in the first positional relationship. In this case, the power transmission coil 24 may be moved from the second height to the first height such that the third positional relationship is changed to the first positional relationship when cutting off the electric power being transmitted from the power transmission device 2 to the power receiving device 3.

[Reference Signs List]

| 2, 2B | power transmission device |
| 3 | power receiving device |
| 4 | control device |
| 24 | power transmission coil |
| 26, 36 | magnet |
| 34 | power receiving coil |
| 100, 100B | power feeding system |
| 281, 284 | moving device |
| 291 | elastic device |

**Claims**

1. A power transmission device, comprising:

   a power transmission circuit that includes a power transmission coil to transmit electric power to a power receiving coil of a power receiving device;
   a magnetic body that is magnetically coupled with the power transmission coil; and
   a moving device that changes a relative positional relationship between the magnetic body and the power transmission coil to change an impedance of the power transmission circuit such that the electric power is cut off or transmitted.

2. The power transmission device according to claim 1, wherein
   the moving device moves the power transmission coil such that the electric power is cut off upon reception of a cutoff signal to cut off the electric power.

3. The power transmission device according to claim 2, wherein
   the magnetic body is disposed to include a winding shaft of the power transmission coil and
   the moving device moves the power transmission coil along the winding shaft.

4. The power transmission device according to claim 3, wherein
   the magnetic body is in a form that has an outer diameter of the magnetic body smaller than an inner diameter of the power transmission coil and
   the moving device moves the power transmission coil such that a state where the magnetic body is encircled by the power transmission coil is shifted to a state where the magnetic body is not encircled by the power transmission coil, or vice versa.

10

**5.** The power transmission device according to claim 1, wherein
the moving device moves the magnetic body to transmit or cut off the electric power according to a position of the power receiving device.

**6.** The power transmission device according to claim 5, wherein
the power receiving device includes

a first magnet, and

the moving device includes

a second magnet that is secured to the magnetic body to move together with the magnetic body based on a magnetic force imparted by the first magnet and
an elastic body that imparts an elastic force to the magnetic body in a direction opposite a direction of the magnetic force,

the elastic force being set such that the magnetic body moves based on the magnetic force that works against the elastic force to transmit the electric power when the power receiving device is disposed at a first position at which the electric power is transmitted, and the magnetic body moves based on the elastic force to cut off the electric power when the power receiving device is disposed at a second position that is farther away from the power transmission coil than the first position and that does not allow the electric power to be transmitted.

**7.** The power transmission device according to claim 6, wherein the second magnet is secured side by side with the magnetic body in a moving direction of the magnetic body.

**8.** The power transmission device according to any one of claims 1 through 7, wherein the magnetic body is a ferrite.

**9.** The power transmission device according to any one of claims 1 through 7, wherein the magnetic body is a coil.

**10.** A power feeding system, comprising:

a power receiving device that includes a power receiving coil; and
a power transmission device that transmits electric power to the power receiving coil, wherein
the power transmission device includes
a power transmission circuit that includes a power transmission coil to transmit electric power to the power receiving coil,
a magnetic body that is magnetically coupled with the power transmission coil, and
a moving device that changes a relative positional relationship between the magnetic body and the power transmission coil to change an impedance of the power transmission circuit such that the electric power is cut off or transmitted.

FIG. 1

FIG. 2

FIG. 3

FIG. 4

FIG. 5

FIG. 6

CONTROL DEVICE

CPU 41

COMMUNICATIONS DEVICE 42

STORAGE DEVICE 43

DISPLAY DEVICE 44

INPUT DEVICE 45

4

FIG. 7

4

CONTROL DEVICE

46

DETECTING UNIT

47

CONTROL UNIT

FIG. 8

FIG. 9

FIG. 10

## INTERNATIONAL SEARCH REPORT

| International application No. |
| --- |
| PCT/JP2013/083133 |

| A. CLASSIFICATION OF SUBJECT MATTER |
| --- |
| *H02J17/00*(2006.01)i |

According to International Patent Classification (IPC) or to both national classification and IPC

| B. FIELDS SEARCHED |
| --- |

Minimum documentation searched (classification system followed by classification symbols)
H02J17/00

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2012-095456 A (Sanyo Electric Co., Ltd.), 17 May 2012 (17.05.2012), paragraphs [0087] to [0123]; fig. 13 to 21 (Family: none) | 1-5,8-10 |
| A | WO 2013/128554 A1 (Hitachi Engineering & Services Co., Ltd.), 06 September 2013 (06.09.2013), paragraphs [0011] to [0033]; fig. 1 to 5 (Family: none) | 1-10 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 27 December, 2013 (27.12.13) | 14 January, 2014 (14.01.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/083133

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-518982 A (The University of British Columbia), 16 August 2012 (16.08.2012), entire text; all drawings & US 2011/0304220 A1    & EP 2401801 A & WO 2010/096917 A1    & CA 2752096 A & CN 102334263 A | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013070590 A